Europäisches Patentamt

(19) European Patent Office

Office européen des brevets

(11) Publication number:

# 0 058 482
# B1

(12) EUROPEAN PATENT SPECIFICATION

(45) Date of publication of patent specification: **05.06.85**

(21) Application number: **82300421.3**

(22) Date of filing: **27.01.82**

(51) Int. Cl.⁴: **H 04 M 11/06, H 04 Q 11/04**

(54) Method and apparatus for transmitting data with digitally encoded speech.

(30) Priority: **16.02.81 GB 8104827**

(43) Date of publication of application:
**25.08.82 Bulletin 82/34**

(45) Publication of the grant of the patent:
**05.06.85 Bulletin 85/23**

(84) Designated Contracting States:
**AT BE CH DE FR GB IT LI LU NL SE**

(56) References cited:
**EP-A-0 003 009**
**EP-A-0 006 244**
**GB-A-1 555 394**
**GB-A-2 063 018**

**INTERNATIONAL CONFERENCE ON COMMUNICATIONS, June 10-14, 1979 Boston NEW YORK (US) A.G. ORBELL "Preparations for evolutions towards an integrated services digital network", pages 29.1.1-29.1.6**

(73) Proprietor: **BRITISH TELECOMMUNICATIONS**
**2-12 Gresham Street**
**London EC2V 7AG (GB)**

(72) Inventor: **Walters, Robert Ernest**
**Gazebo Farm Grundisburgh Road**
**Woodbridge Suffolk (GB)**
Inventor: **Barrett, Robert Edward**
**53 Hutland Road**
**Ipswich Suffolk (GB)**

(74) Representative: **Smith, Norman Ian et al**
**F.J. CLEVELAND & COMPANY 40-43 Chancery Lane**
**London WC2A 1JQ (GB)**

Courier Press, Leamington Spa, England.

## Description

This invention relates to the transmission of data in the digital speech paths of a digital transmission arrangement.

Telephone exchanges are known in which a digital switching device can interconnect a plurality of ports associated with the exchange. The switching device operates on digitally encoded speech samples with each sample comprising a plurality of bits, typically 8. Digital switching devices are also used to switch digital signals representative of data between data terminal devices such as VDU's and teletypes.

It has been proposed in, for example, European Patent Application No. 0006244 to transmit data with digitally encoded speech samples by replacing one or more of the least significant bits of each speech sample by a data bit or bits.

It has been proposed in, for example, European Patent Application No. 0003009 to transmit data with digital speech signals by replacing one or more of the digital speech signals by additional digital information which is provided with a special identification code comprising at least one bit.

The present invention is concerned with a method and apparatus which provide a relatively simple and effective way of indicating when data is present in speech samples.

According to a first aspect of the present invention there is provided a method of transmitting data with digitally encoded speech samples in a digital transmission system in which one or more of the least significant bits of a speech sample is replaced by a bit or bits representative of data to be transmitted characterised in that at least two of the least significant bits are replaced, one of the replaced bits being a control bit and another a data bit, the control bits of n successive samples forming a code to indicate the presence of data, said code when indicative of data comprising a first digit of one binary value followed by n-1 digits all of the other binary value.

According to a second aspect of the present invention there is provided a method of transmitting data through a telephone exchange which is arranged to switch digitally encoded speech samples characterised in that at least two of the least significant bits of each sample are replaced so that one of the replaced bits is a control bit and another a data bit, the control bits of n successive samples forming a code to indicate the presence of data, said code when indicative of data comprising a first digit of one binary value, followed by n-1 digits all of the other binary value.

The control bits may be arranged to define a valid data code of binary 1 followed by 0000000.

At a receiving port the speech bits are separated from the data bits so that the data bits can be transmitted to a data terminal and the speech bits decoded prior to transmission to a telephone instrument.

According to a third aspect of the present invention there is provided a digital transmission arrangement for transmitting digitally encoded speech samples between two or more terminals in which data is transmitted with the speech samples by replacing one or more of the least significant bits of each speech sample by a bit or bits representative of the data characterised in that each terminal has associated therewith circuit means for replacing at least the two least significant bits of each speech sample so that one of the replaced bits is a control bit and another bit is a data bit, the control bits of n successive samples forming a code to indicate the presence of data, said code when indicative of data comprising a first digit of one binary value followed by n-1 digits all of the other binary value.

Each terminal may include a circuit which, when data is not inserted in the speech samples, operates to prevent that bit of each speech sample corresponding to the control bit from being in a condition indicative of data being present. Each said circuit may include a counter which is arranged to be incremented when the least significant bit of each speech sample has a predetermined binary value and means for sensing when the count of the counter reaches a predetermined value. Each terminal may include means for detecting bits representative of data in speech samples received by the terminal.

According to a fourth aspect of the present invention there is provided an interface circuit for a telephone exchange which is arranged to switch digitally encoded speech samples, said interface circuit comprising a first input/output terminal for connection to a telephone instrument, coding and decoding means connected to said first input/output terminal for coding and decoding speech signals, said coding and decoding means having an output from which digitally encoded speech samples can be transmitted to a digital switching device of the telephone exchange and an input for receiving digitally encoded speech samples from the switching device, a second input/output terminal for connection to a data terminal device, and bit insertion means coupling the said second input/output terminal to the output of the coding and decoding means characterised in that the bit insertion means is arranged to replace at least the two least significant bits of a speech sample so that one bit is a control bit and another a data bit, the control bits of n successive samples forming a code to indicate the presence of data, said code when indicative of data comprising a first digit of one binary value followed by n-1 digits all of the other binary value.

The invention will be described now by way of example only with particular reference to the accompanying drawings. In the drawings:

Figure 1 is a block schematic diagram of a digital switching device as described in U.K. Patent Specification No. 2 027 565;

Figure 2 is a block diagram illustrating one form of apparatus in accordance with the present invention, and

Figure 3 is a block schematic diagram showing in more detail the apparatus of Figure 2.

The present embodiment will be described with reference to a digital switching device of the type described in U.K. Patent Specification No. 2 027 565. This switching system is a private automatic branch exchange (PABX) of the stored program type which uses an eight bit microprocessor as a central processing unit. Switching between lines, trunks, auxiliary units and an operator console is via pulse code modulation (PCM) techniques. Speech signals are encoded to an A-law representation prior to their transmission to the switch. Switching between parties is accomplished by sending the encoded signals at an appropriate time to a receiving party and reconverting the digital signals to analogue form. Because all the speech signals are digitally encoded before being applied to the digital switch the PABX can send the speech signals directly to a local exchange over a regenerated line system without the need for expensive PCM multiplexing equipment at the PABX location. The device has a capacity of 160 ports which typically can comprise 120 telephonic extensions, 24 exchange lines and 16 miscellaneous auxiliaries such as an MF4 detector, inter-PABX or test port circuit and an operator console interface.

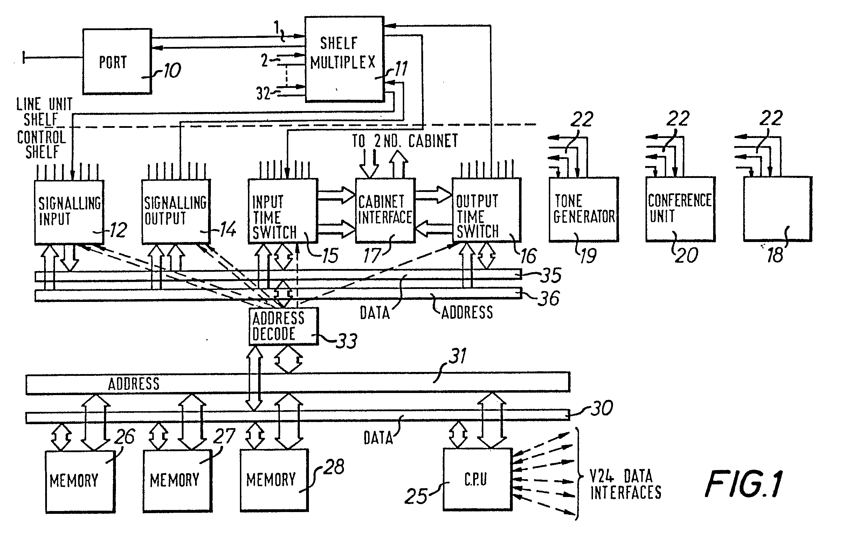

Referring to Figure 1 the PABX has a plurality of line units one of which is indicated at 10. Each line unit is associated with, for example, a telephonic termination or an exchange line and is arranged to operate synchronously to produce eight bit PCM samples every 125 usec. Each line unit includes a codec for conversion between digital and analogue signals. The line units are connected in groups of 32 to shelf multiplex circuits one of which is indicated at 11. Each line unit is connected to its associated shelf multiplex circuit via two lines, one for signals travelling in one direction and the other for signals travelling in the opposite direction. Each shelf multiplex circuit 11 is connected to a signalling input circuit 12, a signalling output circuit 14, an input time switch 15 and an output time switch 16. The input and output time switches are connected via a cabinet interface circuit 17.

The PABX also has a tone generator circuit 19, a conference unit 20 and a spare card position 18 each of which is linked by highways 22 to the signalling circuits 12 and 14 and to the time switches 15 and 16.

The PABX is controlled by a central processor unit 25 which has associated memories 26, 27, 28. The processor unit 25 and the memories 26, 28 are linked to the signalling circuit and time switch circuits by data and address buses 30, 31 and address decode circuit 33 and data and address buses 35 and 36.

Briefly in operation during each 125 usec interval the line unit 10 sends to its associated shelf multiplex 11 over an individual wire a group of nine bits, eight of which comprise a speech sample and the ninth of which is part of an eight bit signalling code. The data rate between the line unit 10 and its shelf multiplex circuit 11 is 72 kbits per sec of combined speech and signalling. The shelf multiplex circuit 11 assembles 32 of the 72 kbits per sec stream in a fixed order onto a digital highway at 2304 kbits per sec and then separates the speech and signalling data for transmission respectively to the input time switch 15 at 2048 kbits per sec and to the signalling input circuit 12 at 256 kbits per sec. The time switches operate under the control of the central processor unit 25 to direct the digital signals to the appropriate ports. The operation of the switches is described in more detail in U.K. Patent Specification No. 2 027 565 and will not be described here.

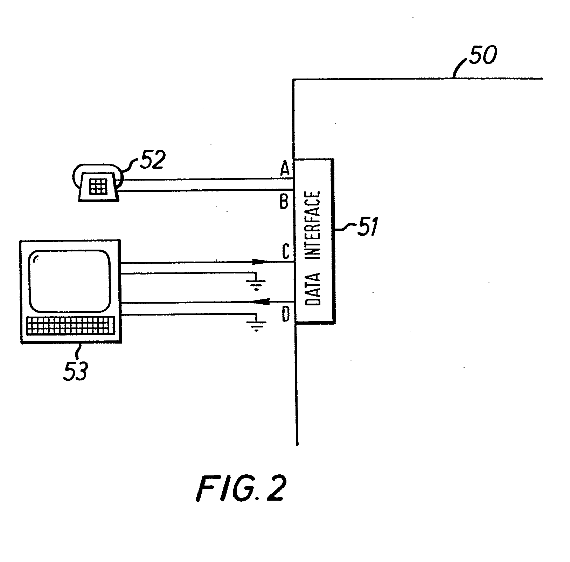

In the present arrangement each interface circuit 10 is arranged so that simultaneous transmission of speech and data signals can take place between ports of the exchange. The proposal is to replace the two least significant bits of each speech sample from an encoder with bits representing the data to be sent and then to recover that data at a receiving port prior to the decoder associated with that port. The arrangement is shown schematically in Figure 2 where the exchange is shown at 50. A data interface circuit is shown at 51 and has connections to a telephone instrument 52 and a data terminal device 53. The telephone instrument 52 is connected to the data interface by A and B wires, and the terminal device 53 is connected to the interface 51 by C and D wires. The C wire is a transmit wire whilst the D wire is a receive wire. If data is to be transmitted from the device 53 to another port associated with the exchange, the interface 51 operates to substitute bits representative of the data in the two least significant bit positions of each speech sample produced by an encoder in the interface circuit 51. When data is being received from another port the interface circuit 51 operates to extract the data bits from the speech bits, the data bits being transmitted to the device 53 and the speech bits being fed to a decoder for transmission as analogue signals to the telephone instrument 52. Switching of the samples by the digital switching device takes place as described in U.K. Patent Specification No. 2 027 565.

It will be appreciated that this operation only occurs when there is data available to transmit. Otherwise each speech sample uses all available eight bits. The result of the substitution process is a small increase in the quantising noise heard in the speech channel when data is being sent but as only the two least significant bits of the code word are involved the effect is very slight. When no data is being sent the degradation of the speech channel is negligible.

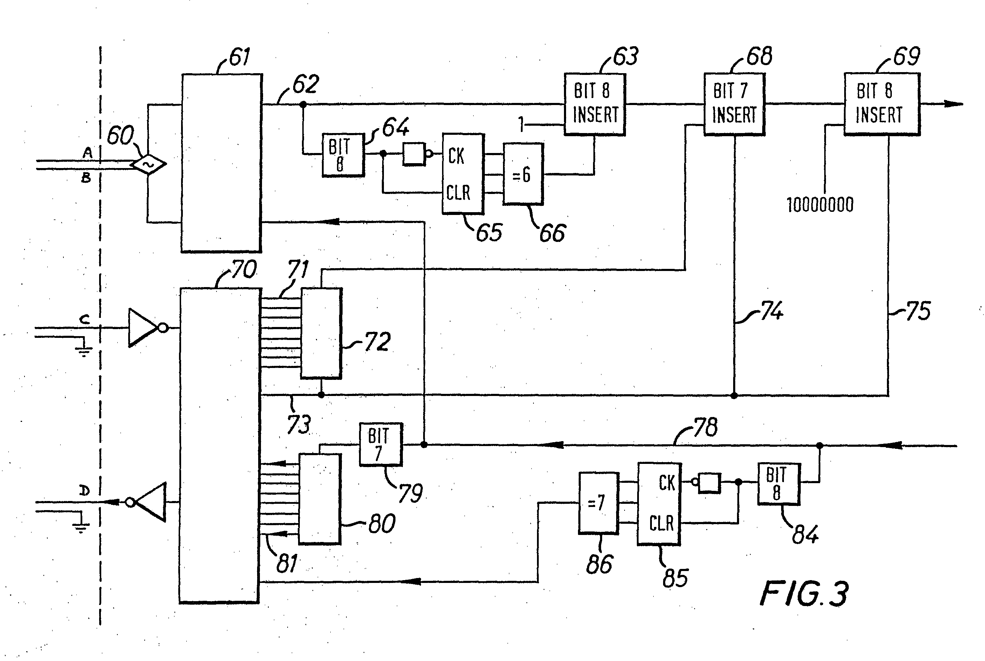

Figure 3 is a more detailed diagram of the interface circuit 51 which is designed to operate with a valid data code of a binary 1 followed by 0000000. As shown in this Figure the A and B wires associated with the telephone instrument are connected by a two wire to four wire converter 60 to a codec 61. The codec has an output 62 which is connected to a bit 8 insert circuit 63. The output 62 is also connected to a further circuit 64 which is arranged to receive the eighth bit of a speech sample transmitted from the codec 61. The circuit 64 is connected to a counter 65 the output from which is connected to a further circuit 66 which is arranged to sense when the count of the counter 65 reaches a count of six. The circuit 66 is connected to the bit 8 insert circuit 63. The output from the circuit 63 is connected to a bit 7 insert circuit 68 which is in turn connected to a further bit 8 insert circuit 69. The output of the circuit 69 is connected to the shelf multiplex circuit 11 shown in Figure 1. The circuits 63, 68 and 69 can be implemented using NAND gates.

The C wire from the terminal 53 is connected to an input of Universal Asynchronous receive/transmit device (UART) 70 which has outputs 71 connected to a shift register 72. The output from the shift register 72 is connected to a second input of the circuit 68. A further output from the UART 73 is connected to the circuits 68, 69 by lines 74, 75.

The UART also receives signals from the shelf multiplex 11 via line 78 which is also connected directly to the codec 61. The line 78 is connected by a circuit 79 to a shift register 80. The shift register 80 has parallel outputs 81 which connect to the UART 70. The UART 70 has an output which is connected to the D wire of Figure 2. The line 78 is also connected to the UART via a circuit 84 which receives the eighth bit of incoming samples, a counter 85 and a circuit 86.

In operation characters are transmitted serially from the terminal device 53 using standard V24 signal levels and are received at the interface circuit 51 by a buffer which converts the signals to TTL levels. The signals are fed to the UART 70 which recognises the start bit of the code and staticises the data as an eight bit word. When a complete word has been received in the UART it is transmitted through the exchange by inserting it one bit at a time into the bit 7 position of eight successive words from the PCM encoder 61. This is carried out using the shift register 72 and the circuit 68. At the same time a code is inserted into the bit 8 position of the same words by the circuit 69 to indicate that the data is being sent. The valid data code is chosen to be a binary 1 followed by 0000000. This code, which is shown in Table 1, identifies the start of the data and is simple to implement. In Table 1 SA to SH represent signalling bits, P1 to P8 speech bits with P8 being the least significant bit, D0 to D7 data bits inserted in place of P7, and C0 to C7 the data valid code inserted in place of P8. In this case C0=1 and C1 to C7=0. Table 1 shows serial signals transmitted through the exchange of Figure 1. The first four lines show a normal frame containing speech only and the next four lines show a frame containing data and code bits in the P7 and P8 positions.

TABLE 1

| SA | P1 | P2 | P3 | P4 | P5 | P6 | P7 | P8 | SB | P1 | P2 | P3 | P4 | P5 | P6 | P7 | P8 |
|----|----|----|----|----|----|----|----|----|----|----|----|----|----|----|----|----|----|
| SC | P1 | P2 | P3 | P4 | P5 | P6 | P7 | P8 | SD | P1 | P2 | P3 | P4 | P5 | P6 | P7 | P8 |
| SE | P1 | P2 | P3 | P4 | P5 | P6 | P7 | P8 | SF | P1 | P2 | P3 | P4 | P5 | P6 | P7 | P8 |
| SG | P1 | P2 | P3 | P4 | P5 | P6 | P7 | P8 | SH | P1 | P2 | P3 | P4 | P5 | P6 | P7 | P8 |
| SA | P1 | P2 | P3 | P4 | P5 | P6 | DO | CO | SB | P1 | P2 | P3 | P4 | P5 | P6 | D1 | C1 |
| SC | P1 | P2 | P3 | P4 | P5 | P6 | D2 | C2 | SD | P1 | P2 | P3 | P4 | P5 | P6 | D3 | C3 |
| SE | P1 | P2 | P3 | P4 | P5 | P6 | D4 | C4 | SF | P1 | P2 | P3 | P4 | P5 | P6 | D5 | C5 |
| SG | P1 | P2 | P3 | P4 | P5 | P6 | D6 | C6 | SH | P1 | P2 | P3 | P4 | P5 | P6 | D7 | C7 |

It is important that the valid data code is never generated by the encoder itself or a receiving port will receive the spurious data character. The circuit consisting of components 64, 65 and 66 is provided to monitor the bit 8 signal leaving the codec 61 and operates as follows. A "1" in the bit 8 position causes the counter 65 to be reset and a "0" causes it to be incremented. If the count reaches 6 as sensed by the circuit 66 a "0" in the next bit 8 position would complete the code. This bit is therefore forced to a "1" avoiding the code and the counter 65 is reset.

The effect of substituting the least significant bits of each speech sample as described above on the speech performance of the system is negligible. Calculations indicate that the circuit has a probability of 0.4% of operating on each speech sample and on each occasion that this occurs the sample will only be altered by one step on a 256 point encoding code.

The data in each speech sample passes through the exchange along with speech bits in the normal way as described in the above mentioned Patent Specification and then arrives at the receive side of a data port. All bit 7 information in the incoming stream passes through the shift register 80 whilst the bit 8 code is monitored by the counter 85 which is similar to the counter 65 on the transmit side. The counter 85 is reset by a "1" and incremented by a "0". If the count ever reaches the value 7 as sensed by the circuit 86 it indicates that the data has been transmitted from the far end and at this instant the shift register 80 will contain a complete data word. This data is loaded into the UART 70 and sent serially via a line driver and receive data line to the terminal device 53.

The protocol within the exchange allows transmission of up to 1000 8 bit characters per sec. The system can therefore be used with devices of up to 9600 baud since this corresponds to 960 characters per sec after start and stop bits have been removed. The clock signal to the UART on the data interface will be set to match the speed of the terminal device connected to that particular port. This will allow devices of different speeds to communicate via the exchange. Slow devices will always be able to send to faster ones and faster devices will be able to send to slower ones if pauses are left between the characters to reduce the mean data rate.

An advantage of the present approach is that a combined speech and signalling port can be provided very simply with no requirement for special operating software within the digital switching exchange. The telephone associated with the data port is used quite normally for making and receiving calls with speech only so that all facilities associated with the stored program exchange e.g. diversion, transfer, are available. If a call is made to another port which is equipped for data, voice communication can continue whilst data is being sent via the data channel.

It will be appreciated that the present technique can be used with codes other than the one described above. Also it is possible to use a different number of the least significant bits of each speech sample to provide the data channel. In theory as many as 7 bits of an 8 bit sample may be employed.

The technique is described above in terms of a single exchange. It will, however, operate over many exchanges within a telephone network.

Although the present invention has been described in terms of a telephone exchange it has much wider application and could be used over any digital transmission link which carries digitally encoded speech samples.

## Claims

1. A method of transmitting data with digitally encoded speech samples in a digital transmission system in which one or more of the least significant bits of a speech sample is replaced by a bit or bits representative of data to be transmitted characterised in that at least two of the least significant bits are replaced, one of the replaced bits being a control bit and another a data bit, the control bits of n successive samples forming a code to indicate the presence of data, said code when indicative of data comprising a first digit of one binary value followed by n-1 digits all of the other binary value.

2. A method of transmitting data through a telephone exchange which is arranged to switch digitally encoded speech samples characterised in that at least two of the least significant bits of each sample are replaced so that one of the replaced bits is a control bit and another a data bit, the control bits of n successive samples forming a code to indicate the presence of data, said code when indicative of data comprising a first digit of one binary value, followed by n-1 digits all of the other binary value.

3. A method as claimed in claim 1 or claim 2 characterised in that the control bits are arranged to define a valid data code of binary 1 followed by 0000000.

4. A method as claimed in any preceding claim characterised by the step of separating the speech bits from the data bits at a receiving port so that the data bits can be transmitted to a data terminal and the speech bits decoded prior to transmission to a telephone instrument.

5. A digital transmission arrangement for transmitting digitally encoded speech samples between two or more terminals in which data is transmitted with the speech samples by replacing one or more of the least significant bits of each speech sample by a bit or bits representative of the data characterised in that each terminal has associated therewith circuit means (68, 69) for replacing at least the two least significant bits of each speech sample so that one of the replaced bits is a control bit and another bit is a data bit, the control bits of n successive samples forming a code to indicate the presence of data, said code when indicative of data comprising a first digit of one binary value followed by n-1 digits all of the other binary value.

6. A digital transmission arrangement as claimed in claim 5 characterised in that each terminal includes a circuit (64, 65, 66) which, when data is not inserted in the speech samples, operates to prevent that bit of each speech sample corresponding to the control bit from being in an condition indicative of data being present.

7. A digital transmission arrangement as claimed in claim 6 characterised in that said circuit includes a counter (65) which is arranged to be incremented when the least significant bit of each speech sample has a predetermined binary value and means (66) for sensing when the count of the counter (65) reaches a predetermined value.

8. A digital transmission arrangement as claimed in claim 6 or claim 7 characterised in that each terminal includes means (84, 85, 86) for detecting bits representative of data in speech samples received by the terminal.

9. An interface circuit for a telephone exchange which is arranged to switch digitally encoded speech samples, said interface circuit comprising a first input/output terminal (60) for connection to a telephone instrument, coding and decoding means (61) connected to said first input/output terminal for coding and decoding speech signals, said coding and decoding means (61) having an output (62) from which digitally encoded speech samples can be transmitted to a digital switching device of the telephone exchange and an input for receiving digitally encoded speech samples from the switching device, a second input/output terminal (70) for connection to a data terminal device, and bit insertion means (72, 68, 69) coupling the said second input/output terminal (70) to the output of the coding and decoding means (61), characterised in that said bit insertion means is arranged to replace at least the two least significant bits of a speech sample so that one bit is a control bit and another a data bit, the control bits of n successive samples forming a code to indicate the presence of data, said code when indicative of data comprising a first digit of one binary value followed by n-1 digits all of the other binary value.

10. An interface circuit as claimed in claim 9 characterised by including a circuit (64, 65, 66) which, when data is not inserted in the speech samples, operates to prevent that bit of each sample corresponding to the control bit from being in a condition indicative of data being present.

11. An interface circuit as claimed in claim 9 or claim 10 characterised by including means (84, 85, 86) for detecting bits representative of data in speech samples received from said digital switching device and for directing the data bits to said second input/output terminal (70).

**Patentansprüche**

1. Verfahren zur Übertragung von Daten zusammen mit digital kodierten Sprachproben in einem digitalen Übertragungssystem, wobei eine oder mehrere der niedrigstwertigen Bitstellen einer Sprachprobe durch ein oder mehrere Bits, die zu übertragende Daten darstellen, ersetzt sind, dadurch gekennzeichnet, daß mindestens zwei der niedrigstwertigen Bitstellen ersetzt werden, wobei eine der ersetzten Bitstellen ein Steuerbit und ein Datenbit darstellen und wobei die Steuerbits n-aufeinanderfolgender Abtastproben einen Code bilden, der die Anwesenheit von Daten angibt und der dann aus einer ersten Stelle eines ersten Binärwerts, der n-1 Stellen des anderen Binärwerts folgen, besteht.

2. Verfahren zur Übertragung von Daten durch eine Telefonvermittlungsanlage, die digital kodierte Sprachproben durchschaltet, dadurch gekennzeichnet, daß zumindest zwei der niedrigstwertigen Bitstellen jeder Probe so ersetzt werden, daß eine der ersetzten Bitstellen ein Steuerbit und eine andere ein Datenbit ist, wobei die Steuerbits n-aufeinanderfolgender Proben einen Code bilden, der die Anwesenheit von Daten angibt und wenn Daten anwesend sind, eine erste Stelle eines Binärwerts, der n-1 Stellen des anderen Binärwerts folgen, aufweist.

3. Verfahren nach Anspruch 1 oder 2, dadurch gekennzeichnet, daß die Steuerbits einen Datengültigkeitscode bilden, der eine binäre 1, der 0000000 folgen, aufweist.

4. Verfahren nach einem der vorangehenden Ansprüche, gekennzeichnet durch einen Verfahrensschritt, der die Sprachbits von den Datenbits an einem Empfangsanschluß abtrennt, so daß die Datenbits zu einem Datenendgerät und die Sprachbits zuerst dekodiert und dann zu einem Telefonapparat übertragen werden.

5. Vorrichtung zur Übertragung von Digitaldaten zusammen mit digital kodierten Sprachproben zwischen zwei oder mehreren Anschlüssen, wobei in den Sprachproben eine oder mehrere der niedrigstwertigen Bitstellen durch ein oder mehrere Bits, die die Daten angeben, ersetzt sind, dadurch gekennzeichnet, daß jeder Anschluß eine zugehörige Schaltung (68, 69) aufweist, die zumindest die zwei niedrigstwertigen Bitstellen so ersetzt, daß eine der ersetzten Bitstellen ein Steuerbit und eine andere Bitstelle ein Datenbit sind, wobei die Steuerbits n-aufeinanderfolgender Proben einen Code bilden, der die Anwesenheit von Daten angibt und der bei Anwesenheit von Daten eine erste Stelle eines ersten Binärwerts, der n-1 Stellen des anderen Binärwerts folgen, aufweist.

6. Vorrichtung nach Anspruch 5, dadurch gekennzeichnet, daß jeder Anschluß eine Schaltung (64, 65, 66) aufweist, die, wenn keine Daten in die Sprachproben eingefügt werden, verhindert, daß Bits jeder Sprachprobe der die Anwesenheit der Daten angebenden Steuerbits entsprechen.

7. Vorrichtung nach Anspruch 6, dadurch gekennzeichnet, daß die Schaltung einen Zähler (65) aufweist, der inkrementiert wird, wenn das niedrigstwertige Bit jeder Sprachprobe einen vorgegebenen Binärwert aufweist und eine Einrichtung (66), die erfaßt, wenn der Zählerstand des Zählers (65) einen vorgegebenen Wert erreicht.

8. Vorrichtung nach Anspruch 6 oder 7, dadurch gekennzeichnet, daß jeder Anschluß eine Einrichtung (84, 85, 86) aufweist, die Bitstellen, die Daten in jeder von dem Anschluß empfangenen Sprachprobe entsprechen, erfaßt.

9. Schnittstellenschaltung für eine digital kodierte Sprachproben schaltende Telefonvermittlungseinrichtung, wobei die Schnittstellenschaltung aufweist: einen ersten Eingangs/Ausgangs-Anschluß (60), mit dem ein Telefonapparat verbunden ist, eine Kodier-Dekodiereinrichtung (61), dit mit dem ersten Eingangs/Ausgangs-Anschluß verbunden ist, Sprachsignale kodiert und dekodiert und einen Ausgang (62) aufweist, von dem digital kodierte Sprachproben zu einer digitalen Schalteinrichtung der Telefonvermittlungsstelle übertragbar sind und einen Eingang, der digital kodierte Sprachproben von der Schaltvorrichtung empfängt, und wobei die Schnittstellenschaltung einen zweiten Eingabe/Ausgabe-Anschluß (70), an den ein Datenendgerät anschließbar ist und eine Biteinfügeeinrichtung (72, 68, 69) aufweist, die den zweiten Eingabe/Ausgabe-Anschluß (70) mit dem Ausgang des Kodierers-Dekodierers (61) verbinden, dadurch gekennzeichnet, daß die Biteinfügeeinrichtung mindestens die zwei niedrigstwertigen Bitstellen einer Sprachprobe so ersetzt, daß ein Bit ein Steuerbit und ein weiteres ein Datenbit sind, wobei die Steuerbits n-aufeinanderfolgender Proben einen Code bilden, der die Anwesenheit von Daten angibt und bei Anwesenheit von Daten aus einer ersten Stelle eines ersten Binärwerts, der n-1 Stellen des anderen Binärwerts folgen, besteht.

10. Schnittstellenschaltung nach Anspruch 9, dadurch gekennzeichnet, daß sie eine Schaltung (64, 65, 66) enthält, die, wenn keine Daten in die Sprachprobe eingefügt werden, verhindert, daß Bitstellen jeder Probe den Steuerbits, die die Anwesenheit von Daten angeben, entsprechen.

11. Schnittstellenschaltung nach Anspruch 9 oder 10, dadurch gekennzeichnet, daß sie eine Einrichtung (84, 85, 86) aufweist, die Datenbits in jeder Sprachprobe erfaßt, die von der Digitalschaltvorrichtung empfangen sind und diese Datenbits dem zweiten Eingabe/Ausgabe-Anschluß (70) zuführt.

## Revendications

1. Un procédé de transmission de données avec des échantillons de parole codés de façon numérique dans un système de transmission numérique, dans lequel on remplace un ou plusieurs des bits de moindre poids d'un échantillon de parole par un ou plusieurs bits représentatifs de données à transmettre, caractérisé en ce qu'on remplace au moins deux des bits de moindre poids, l'un des bits remplacés étant un bit de commande et un autre un bit de données, les bits de commande de n échantillons successifs formant un code destiné à indiquer la présence de données, et ce code, lorsqu'il indique la présence de données, comprenant un premier chiffre d'une première valeur binaire suivi par n-1 chiffres ayant tous l'autre valeur binaire.

2. Un procédé de transmission de données par un commutateur téléphonique qui est conçu de façon à commuter des échantillons de parole codés de façon numérique, caractérisé en ce qu'on remplace au moins deux des bits de moindre poids de chaque échantillon, de façon que l'un des bits remplacés soit un bit de commande et un autre un bit de données, les bits de commande de n échantillons successifs formant un code pour indiquer la présence de données, et ce code, lorsqu'il indique des données, comprenant un premier chiffre d'une valeur binaire, suivi par n-1 chiffres ayant tous l'autre valeur binaire.

3. Un procédé selon la revendication 1 ou la revendication 2, caractérisé en ce que les bits de commande sont conçus de façon à définir un code de données valides comprenant un 1 binaire suivi par 0000000.

4. Un procédé selon l'une quelconque des revendications précédentes, caractérisé par l'opération qui consiste à séparer les bits de parole par rapport aux bits de données à un accès de réception, de façon à pouvoir transmettre les bits de données vers un terminal de données et à décoder les bits de parole avant la transmission vers un appareil téléphonique.

5. Un dispositif de transmission numérique destiné à transmettre des échantillons de parole codés de façon numérique entre deux terminaux, ou plus, dans lequel on transmet des données avec les échantillons de parole, en remplaçant un ou plusieurs des bits de moindre poids de chaque échantillon de parole par un ou plusieurs bits représentatifs des données, caractérisé en ce qu'à chaque terminal est associé un circuit (68, 69) destiné à remplacer au moins les deux bits de moindre poids de chaque échantillon de parole, de façon que l'un des bits remplacés soit un bit de commande et qu'un autre bit soit un bit de données, les bits de commande de n échantillons successifs formant un code destiné à indiquer la présence de données, et ledit code, lorsqu'il indique des données comprenant un premier chiffre d'une valeur binaire suivi par n-1 chiffres ayant tous l'autre valeur binaire.

6. Un dispositif de transmission numérique selon la revendication 5, caractérisé en ce que chaque terminal comprend un circuit (64, 65, 66) qui, lorsque des données ne sont pas insérées dans les échantillons de parole, empêche que le bit de chaque échantillon de parole qui correspond au bit de commande ne soit dans une condition indiquant la présence de données.

7. Un dispositif de transmission numérique selon la revendication 6, caractérisé en ce que le circuit comprend un compteur (65) qui est conçu de façon à être incrémenté lorsque le bit de moindre poids de chaque échantillon de parole a une valeur binaire prédéterminée, et des moyens (66) destinés à détecter le moment auquel le compte du compteur (65) atteint une valeur prédéterminée.

8. Un dispositif de transmission numérique selon la revendication 6 ou la revendication 7, caractérisé en ce que chaque terminal comprend des moyens (84, 85, 86) destinés à détecter des bits représentatifs de données dans des échantillons de parole reçus par le terminal.

9. Un circuit d'interface pour un autocommutateur téléphonique qui est conçu de façon à commuter des échantillons de parole codés sous forme numérique, ce circuit d'interface comprenant une première borne d'entrée/sortie (60) destinée à être connectée à un appareil téléphonique, des moyens de codage et de décodage (61) connectés à la première borne d'entrée/sortie pour coder et décoder des échantillons de parole, ces moyens de codage et de décodage (61) ayant une sortie (62) à partir de laquelle des échantillons de parole codés sous forme numérique peuvent être émis vers un dispositif de commutation numérique de l'autocommutateur téléphonique, et une entrée destinée à recevoir des échantillons de parole codés sous forme numérique provenant du dispositif de commutation, une seconde borne d'entrée/sortie (70) destinée à être connectée à un dispositif consistant en un terminal de données, et des moyens d'insertion de bits (72, 68, 69) connectant la seconde borne d'entrée/sortie (70) à la sortie des moyens de codage et de décodage (61), caractérisé en ce que les moyens d'insertion de bits sont conçus de façon à remplacer au moins les deux bits de moindre poids d'un échantillon de parole, de façon qu'un bit soit un bit de commande et un autre soit un bit de données, les bits de commande de n échantillons successifs formant un code destiné à indiquer la présence de données, et ce code, lorsqu'il indique des données, comprenant un premier chiffre d'une valeur binaire suivi par n-1 chiffres ayant tous l'autre valeur binaire.

10. Un circuit d'interface selon la revendication 9, caractérisé en ce qu'il comprend un circuit (64, 65, 66) qui, lorsque des données ne sont pas insérées dans les échantillons de parole, empêche que le bit de chaque échantillon qui correspond au bit de commande ne soit dans une condition indiquant la présence de données.

11. Un circuit d'interface selon la revendication 9 ou la revendication 10, caractérisé en ce qu'il comprend des moyens (84, 85, 86) destinés à détecter des bits représentatifs de données présentes dans des échantillons de parole reçus à partir du dispositif de commutation numérique, et à diriger les bits de données vers la seconde borne d'entrée/sortie (70).

FIG.1

FIG.2

FIG.3